# EUROPEAN PATENT APPLICATION

(11) **EP 4 822 191 A1**
(43) Date of publication of application: **14.10.2026**
(21) Application number: 25169615.9
(22) Date of filing: 10.04.2025
(51) Int. Cl.: F15B 11/068, B60G 17/015, F15B 13/04, F15B 13/043, F15B 20/00, F16K 17/10

(54) **PROTECTION VALVE FOR A COMMERCIAL VEHICLE AND METHOD OF OPERATING A PROTECTION VALVE FOR A COMMERCIAL VEHICLE**

(71) Applicant: ZF CV Systems Europe BV, 1170 Brüssel (BE)
(72) Inventor: OWSIAK, Kamil, 50-506 Wroclaw (PL)
(74) Representative: Copi, Joachim

(57) **Abstract**

A protection valve (10) for a commercial vehicle is provided which is electronically controllable. The protection valve (10) comprises a casing (11). The casing comprises a supply conduit (13) configured to receive gas (G), a circuit conduit (14) configured to provide the gas (G) to a pneumatic circuit of the commercial vehicle, and a bypass conduit (16). The protection valve (10) comprises a shut-off element (30) disposed in the casing (11) and displaceable to selectively open and close a gas passage between the supply conduit (13) and the circuit conduit (14). The protection valve (10) comprises a solenoid valve (40) accommodated within or projecting into the casing (11). The solenoid valve (40) is energizable and deenergizable to selectively cause the displacement of the shut-off element (30) by establishing a bypass flow through the solenoid valve (40) and the bypass conduit (16). Techniques of operating the protection valve (10) are also disclosed.

## Description

The invention relates to components for pneumatic systems of commercial vehicles. The invention relates in particular to a protection valve configured for performance of a protection function in case of a failure of a pneumatic circuit of a commercial vehicle.

Pneumatic systems are used in commercial vehicles in a wide variety of applications, including air dryer systems, pneumatic suspension, pneumatic levelling, door actuation systems, and/or braking systems of commercial vehicles. A protection valve is an important component to ensure safety and functionality of pneumatic systems in commercial vehicles. The protection valve is operative to provide protection in case of a failure in the pneumatic circuit of the commercial vehicle. The protection valve is operative to perform a protection function that cuts off fluid communication between a pressure source (e.g., a compressor) and a failed pneumatic circuit. Thus, the protection valve is operative to ensure that one or several other, non-failed pneumatic circuits continue to receive gas from the compressor at a desired working pressure. The protection valve is operative to mitigate or prevent leakage of gas through the failed pneumatic circuit once the protection valve has been set to a closed state. The protection valve may be provided as a separate component or may be integrated with other components, e.g., in an air processing unit (APU).

EP 2 695 779 B1 and DE 197 00 243 C1 disclose protection valves.

Conventional protection valves for commercial vehicles often have a configuration in which a mechanical operation principle controls at what pressures the valve opens and/or closes. This can result in various shortcomings. For illustration, there can be issues associated with pressure drift over time, caused by, e.g., wear of mechanical parts. This can affect operation of a conventional protection valve. For further illustration, conventional protection valves can have a complex construction to implement the mechanical operation principle. This increased complexity has the potential to adversely affect the robustness of the protection valve. For still further illustration, conventional protection valves introduce delays caused by the mechanical operation principle in such conventional protection valves. In addition, conventional protection valves cannot be readily adapted to accommodate different operation characteristics. This limits the versatility of use of any given protection valve design.

There is a continued need in the art for an improved protection valve for a commercial vehicle and a technique of operating such a protection valve. There is in particular a continued need in the art for a protection valve for a commercial vehicle that provides enhanced characteristics, e.g., with regard to robustness against pressure drift, and that has a simple and robust construction. It is an optional object to provide such a protection valve for a commercial vehicle and operation techniques that reduce time delays as compared to protection valves that rely solely on mechanical operation principles and/or that provide easier adaptability to different desired operation characteristics.

According to aspects of the invention, a protection valve for a commercial vehicle and a method of operating a protection valve for a commercial vehicle as recited in the independent claims are provided. The dependent claims define preferred embodiments.

According to an aspect of the invention, there is provided a protection valve for a commercial vehicle. The protection valve comprises a casing. The casing comprises a supply conduit configured to receive gas at a supply pressure, a circuit conduit configured to provide the gas to a pneumatic circuit of the commercial vehicle, and a bypass conduit. The protection valve comprises a shut-off element disposed in the casing and configured to, in a first position, block a gas passage between the supply conduit and the circuit conduit, and to, in a second position, open the gas passage to allow the gas to flow from the supply conduit to the circuit conduit through the gas passage. The protection valve comprises a bias element configured to provide a bias force to the shut-off element. The protection valve comprises a solenoid valve accommodated within or projecting into the casing, the solenoid valve comprising a first solenoid valve port in fluid communication with the supply conduit and a second solenoid valve port in fluid communication with the bypass conduit, the solenoid valve having an open state to enable a bypass gas flow to flow from the supply conduit through the solenoid valve and the bypass conduit to effect a displacement of the shut-off element from the first position, and the solenoid valve having a closed state for performance of at least a protection function.

Various effects are attained by the protection valve for a commercial vehicle. The protection valve is electronically controllable. This allows filling and protection functions to be performed by energizing and de-energizing a solenoid of the solenoid valve, respectively. The configuration and operation reduces delays that can be associated with conventional protection valve constructions that rely exclusively on mechanical operation principles for opening and closing the valve. The provision of the solenoid to control at what points in time and/or under which conditions (in particular for which supply pressure and/or which pneumatic circuit pressure) allows the protection valve to have a simpler construction as compared to conventional protection valves. The simpler construction contributes to robustness and durability. The electronic controllability also provides improved time characteristics, by reducing delays as compared to legacy implementations of protection valves, and ease of adaptability, as compared to conventional protection valve designs that do not allow valve characteristics to be readily varied unless mechanical modifications are made to the protection valve. The protection valve also provides the effect that it is operative to isolate the pneumatic circuit, when the pneumatic circuit fails, from other pneumatic circuits and the compressor, while securing that a pressure in the other non-failed pneumatic circuits can be increased to a maximum working pressure that is supplied by the compressor.

Preferably, a surface portion of the shut-off element is exposed in the circuit conduit, wherein the solenoid valve is configured to cause, in the open state, an increase of a force applied by a pneumatic circuit pressure in the circuit conduit on the surface portion to effect the displacement of the shut-off element from the first position.

Thereby, the solenoid valve can control the position of the shut-off element using a simple and robust configuration. In particular, the solenoid valve is configured to cause the pneumatic circuit pressure to increase, by means of a bypass flow through the solenoid valve and the bypass conduit, while the shut-off element blocks the gas passage by means of engagement of the shut-off element and a valve seat, as long as there is no failure in the pneumatic circuit to which the circuit conduit is connected.

Preferably, the shut-off element comprises a further surface portion exposed to the supply conduit, wherein the bias element has resilient characteristics that ensure that the bias force applied when the shut-off element is in the first position has a force magnitude that exceeds the product of the supply pressure and a further area of the further surface portion, wherein the force magnitude is less than a product of the supply pressure and the sum of an area of the surface portion and of the further area of the further surface portion.

Thereby, the protection valve is configured to allow the solenoid valve to control the position of the shut-off element using a simple and robust configuration. In particular, the configuration ensures that the gas passage will remain blocked by engagement of the shut-off element with a valve seat if there is a failure in the pneumatic circuit to which the circuit conduit is connected.

Preferably, the protection valve is configured to initiate filling or refilling of a pneumatic circuit connectable to the circuit conduit by means of a bypass flow from the supply conduit through the solenoid valve and the bypass conduit.

Thereby, filling or refilling can be initiated even while the shut-off element blocks the gas passage. This provides versatility in controlling at what point in time filling or refilling of the pneumatic circuit by means of the bypass gas flow is to be initiated in a filling sequence for several pneumatic circuits, including the pneumatic circuit connected to the circuit conduit. The circuit pressure in the pneumatic conduit can also be increased thereby to cause the displacement of the shut-off element to open the gas passage.

Preferably, the solenoid valve is electronically controllable to be set to the closed state responsive to a failure detection for the pneumatic circuit.

Thereby, the protection valve allows pressure drift phenomena to be mitigated, by virtue of the electronic controllability of the solenoid valve. The protection valve also provides ease of adaptability, as valve characteristics are adjustable by means of the electronic control logic without necessarily requiring the physical characteristics of the protection valve to be adjusted to accommodate the adjustment of the valve characteristics.

Preferably, the solenoid valve is electronically controllable to establish a filling sequence that determines an order in which the pneumatic circuit and at least one additional pneumatic circuit are filled.

Thereby, the protection valve allows the pneumatic circuit to be filled with a different timing (e.g., earlier or later) than the at least one additional pneumatic circuit, using electronic control techniques. The filling sequence can thereby be established, taking advantage of the electronic controllability of the solenoid valve. The filling sequence may be dependent on a relevance of the pneumatic circuit for performance of safety-critical functions. For illustration, the protection valve may be electronically controlled such that the pneumatic circuit is filled prior to the at least one additional pneumatic circuit when the pneumatic circuit is more safety-critical (e.g., because it is a braking circuit) than the at least one additional pneumatic circuit (which may be, e.g., an auxiliary system circuit).

Preferably, the protection valve further comprises control electronics configured to process at least one pressure measurement and to control the solenoid valve based on the at least one pressure measurement.

Thereby, the protection valve allows desired valve characteristics to be attained, by virtue of the control performed by the control electronics, thereby mitigating issues associated with pressure drift that would otherwise be caused by wear. In addition, enhanced time response characteristics are attained as compared to mechanical operation principles of protection valves. The protection valve also provides ease of adaptability, as valve characteristics are adjustable by means of the electronic control logic without necessarily requiring the physical characteristics of the protection valve to be adjusted to accommodate the adjustment of the valve characteristics.

Preferably, the control electronics is configured to control the solenoid valve to establish a bypass gas flow from the supply conduit to the circuit conduit through the solenoid valve and the bypass conduit, to initiate filling or re-filling of a pneumatic circuit.

Thereby, filling or refilling can be initiated even while the shut-off element blocks the gas passage. This provides versatility in controlling at what point in time filling or refilling of the pneumatic circuit by means of the bypass gas flow is to be initiated in a filling sequence for several pneumatic circuits, including the pneumatic circuit connected to the circuit conduit.

Preferably, the control electronics is configured to control the solenoid valve to establish a bypass gas flow based on a filling sequence that determines in which order a plurality of pneumatic circuits are to be filled.

Thereby, filling or refilling can be initiated in accordance with the filling sequence while the shut-off element blocks the gas passage. The electronic controllability provides enhanced versatility in realizing the desired filling sequence. This applies in particular when using a plurality of protection valves in combination, each configured to receive pressure from the same compressor and each being a protection valve in accordance with an aspect or embodiment.

Preferably, the control electronics is configured to control the solenoid valve to establish the bypass gas flow based on (e.g., responsive to) command data or command signals that indicate that filling or refilling of the pneumatic circuit connected to the circuit conduit is to be initiated.

Thereby, filling or refilling can be initiated in accordance with the filling sequence. Enhanced controllability is attained by the protection valve.

Preferably, the at least one pressure measurement comprises a pneumatic circuit pressure in the circuit conduit or in the pneumatic circuit, wherein the control electronics is configured to control the solenoid valve based at least on the pneumatic circuit pressure for performance of at least the protection function.

Thereby, the control electronics can process the pneumatic circuit pressure to detect a failure in the pneumatic circuit and can initiate an appropriate control action, comprising controlling the solenoid valve, responsive thereto.

Preferably, the control electronics comprises a non-volatile memory or storage configured to store instruction code, wherein the control electronics is configured to execute the instruction code to process the pneumatic circuit pressure and to control the solenoid valve for performance of at least the protection function.

Thereby, the control electronics can execute the instruction code to detect, based on the pneumatic circuit pressure, a failure in the pneumatic circuit and can initiate an appropriate control action, comprising controlling the solenoid valve, responsive thereto. This provides enhanced time response characteristics and ease of adaptability, as valve characteristics are adjustable by means of the electronic control logic without necessarily requiring the physical characteristics of the protection valve to be adjusted to accommodate the adjustment of the valve characteristics.

Preferably, the control electronics further comprises a data interface configured to receive the instruction code for storage in the non-volatile memory or storage.

Thereby, the valve characteristics are adjustable by means of the instruction code without necessarily requiring the physical characteristics of the protection valve to be adjusted to accommodate the adjustment of the valve characteristics.

Preferably, the control electronics is configured to receive the instruction code during manufacture and/or upon installation in the commercial vehicle and/or after installation in the commercial vehicle.

Thereby, the logic executed to determine under what conditions a solenoid of the solenoid valve is to be energized and deenergized, respectively, can be readily set. An adaptation of the valve characteristics is possible by means of the instruction code, without necessarily requiring the physical characteristics of the protection valve to be adjusted to accommodate the adjustment of the valve characteristics.

Preferably, the protection valve further comprises at least one pressure sensor configured to obtain the at least one pressure measurement.

Thereby, the at least one pressure measurement may be obtained, based upon which the solenoid valve is controlled to fill the pneumatic circuit and perform the protection function.

Preferably, the at least one pressure sensor is interfaced with the control electronics.

Thereby, the control electronics obtains the at least one pressure measurement based upon which the solenoid valve is controlled to fill the pneumatic circuit and perform the protection function.

Preferably, the at least one pressure sensor comprises a first pressure sensor in the supply conduit or in fluid communication with the supply conduit, and/or a second pressure sensor in the circuit conduit or in fluid communication with the circuit conduit.

Thereby, the control electronics obtains the supply pressure and/or the pneumatic circuit pressure, based upon which the solenoid valve is controlled to fill the pneumatic circuit and perform the protection function.

Preferably, the first pressure sensor and the second pressure sensor are housed in the casing or attached to the casing.

Thereby, ease of installation is attained. The casing, which can house the first and second pressure sensors and/or to which the first and second pressure sensors may be attached, can be mounted as an integral unit.

Preferably, the first pressure sensor and the second pressure sensor are provided separately from the casing.

Thereby, greater flexibility in positioning the first and second pressure sensors is attained. This also contributes to ease of installation.

Preferably, the protection valve comprises a filling adjustment mechanism configured to influence a flow of the gas from the supply conduit to the circuit conduit, wherein the filling adjustment mechanism comprises an orifice in fluid communication with the first solenoid valve port.

Thereby, the valve characteristics can be configured, e.g., to set the supply pressure at which filling of the pneumatic circuit is performed and/or to configure a sequence in which the pneumatic circuit (that is connected to the protection valve) and other pneumatic circuits (that may each be connected to a further protection valve, which may also have the configuration of the protection valve disclosed herein) are filled.

Preferably, the orifice is provided in the casing.

Thereby, the valve characteristics can be configured using a simple construction.

Preferably, the orifice is provided in the solenoid valve.

Thereby, the valve characteristics can be configured using a simple construction.

According to a further aspect of the invention, there is provided control electronics for the protection valve according to any aspect or embodiment. The control electronics is configured to control the solenoid valve (e.g., by energizing and de-energizing a solenoid of the solenoid valve) of the protection valve based on a supply pressure sensed by a first pressure sensor and a pneumatic circuit pressure sensed by a second pressure sensor.

Thereby, the control electronics is configured to control the solenoid for performance of at least the filling function and the protection function taking into account the supply pressure and/or the pneumatic circuit pressure sensed by the first and second pressure sensor(s). This contributes to maintaining a consistent operation, reducing the risk of issues that could otherwise result from pressure drift.

Preferably, the control electronics comprises a non-volatile memory or storage configured to store instruction code, wherein the control electronics is configured to execute the instruction code to process the pneumatic circuit pressure and to control the solenoid valve for performance of at least the protection function.

Thereby, the control electronics can execute the instruction code to detect, based on the pneumatic circuit pressure, a failure in the pneumatic circuit and can initiate an appropriate control action, comprising controlling the solenoid valve, responsive thereto. The control electronics contributes to enhanced time response characteristics and ease of adaptability of a protection valve. The control electronics allows valve characteristics to be adjusted by means of an electronic control logic without necessarily requiring the physical characteristics of the protection valve to be adjusted to accommodate the adjustment of the valve characteristics.

Preferably, the control electronics is configured to control the solenoid valve to establish a bypass gas flow from the supply conduit to the circuit conduit through the solenoid valve and the bypass conduit, to initiate filling or re-filling of a pneumatic circuit.

Thereby, filling or refilling can be initiated even while the shut-off element blocks the gas passage. This provides versatility in controlling at what point in time filling or refilling of the pneumatic circuit by means of the bypass gas flow is to be initiated in a filling sequence for several pneumatic circuits, including the pneumatic circuit connected to the circuit conduit.

Preferably, the control electronics is configured to control the solenoid valve to establish a bypass gas flow based on a filling sequence that determines in which order a plurality of pneumatic circuits are to be filled.

Thereby, filling or refilling can be initiated in accordance with the filling sequence while the shut-off element blocks the gas passage. The electronic controllability provides enhanced versatility in realizing the desired filling sequence. This applies in particular when using a plurality of protection valves in combination, each configured to receive pressure from the same compressor and each being a protection valve in accordance with an aspect or embodiment.

Preferably, the control electronics is configured to control the solenoid valve to establish the bypass gas flow based on (e.g., responsive to) command data or command signals that indicate that filling or refilling of the pneumatic circuit connected to the circuit conduit is to be initiated.

Thereby, filling or refilling can be initiated in accordance with the filling sequence. Enhanced controllability is attained by the protection valve.

Preferably, the control electronics further comprises a data interface configured to receive the instruction code for storage in the non-volatile memory or storage.

Thereby, the valve characteristics are adjustable by means of the instruction code without necessarily requiring the physical characteristics of the protection valve to be adjusted to accommodate the adjustment of the valve characteristics.

Preferably, the control electronics is configured to receive the instruction code during manufacture and/or upon installation in the commercial vehicle and/or after installation in the commercial vehicle.

Thereby, the logic executed to determine under what conditions a solenoid of the solenoid valve is to be energized and deenergized, respectively, can be readily set. An adaptation of the valve characteristics is possible by means of the instruction code, without necessarily requiring the physical characteristics of the protection valve to be adjusted to accommodate the adjustment of the valve characteristics.

Preferably, the control electronics comprises an input configured to communicatively interface the control electronics with a first pressure sensor to obtain the supply pressure and with a second pressure sensor to obtain the pneumatic circuit pressure.

Thereby, the supply pressure and the pneumatic circuit pressure may be obtained, based upon which the solenoid valve is controlled to fill the pneumatic circuit and perform the protection function.

According to a further aspect of the invention, there is provided an air processing unit which comprises an air dryer and one protection valve of any aspect or embodiment or several protection valves of any aspect or embodiment.

Thereby, an air processing unit is provided that provides the effects and advantages discussed in association with the protection valve.

Preferably, the supply conduit of the protection valve is connected to an outlet of an air dryer cartridge of the air dryer.

Thereby, the protection valve is interposed between the air dryer and the pneumatic circuit.

Preferably, the air dryer comprises a base and a cartridge that is attachable to and detachable from the based in a reversible destruction-free manner, wherein the protection valve is housed in the base of the air dryer.

Thereby, a compact and robust configuration are provided which also afford ease of installation.

According to a further aspect of the invention, there is provided a multi-circuit protection valve comprising several protection valves of any aspect or embodiment.

Thereby, a multi-circuit protection is provided that affords the effects and advantages discussed in association with the protection valve.

According to a further aspect of the invention, there is provided a commercial vehicle system. The commercial vehicle system comprises a compressor, a pneumatic circuit, and the protection valve or the air processing unit of any aspect or embodiment, having an inlet directly or indirectly connected to the compressor and an outlet directly or indirectly connected to the pneumatic circuit.

Thereby, the technical benefits and advantages discussed in association with the protection valve are utilized in the commercial vehicle system.

Preferably, the commercial vehicle system may be or may comprise a pneumatic or electropneumatic suspension system, pneumatic or electropneumatic levelling system, pneumatic or electropneumatic door actuation system, pneumatic or electropneumatic sensor cleaning system, and/or pneumatic or electropneumatic braking system.

Thereby, the technical benefits and advantages discussed in association with the protection valve are utilized in commercial vehicle systems in which it is particularly important to provide protection against possible failures of the pneumatic circuit.

Preferably, the commercial vehicle system may further comprise one or several additional pneumatic circuits connected to receive gas from the compressor, wherein the protection valve is configured to, in case of failure of the pneumatic circuit, block fluid communication between the supply conduit and the circuit conduit through the bypass conduit to isolate the pneumatic circuit from the compressor and thereby ensure a target working pressure in the one or several additional pneumatic circuits.

Thereby, the protection valve allows the pneumatic circuit to be isolated from the compressor in case of leakage, ensuring that a target pressure (such as a supply working pressure of, e.g., 12.5 bar) is available to the one or several additional pneumatic circuits that are non-failed.

According to a further aspect of the invention, there is provided a commercial vehicle, comprising the protection valve and/or the air processing unit and/or the multi-circuit protection valve and/or the commercial vehicle system of any aspect or embodiment disclosed herein.

Thereby, the technical benefits and advantages discussed in association with the protection valve are utilized in the commercial vehicle.

According to a further aspect of the invention, there is provided a method of operating a protection valve for a commercial vehicle. The protection valve comprises a casing. The protection valve comprises a shut-off element disposed in the casing, the shut-off element being configured to, in a first position, block a gas passage between a supply conduit of the casing and a circuit conduit of the casing, and to, in a second position, open the gas passage to allow the gas to flow from the supply conduit to the circuit conduit through the gas passage. The circuit conduit is coupled to a pneumatic circuit of the commercial vehicle. The protection valve comprises a bias element that provides a bias force to the shut-off element. The protection valve comprises a solenoid valve, the solenoid valve comprising a first solenoid valve port in fluid communication with the supply conduit and a second solenoid valve port in fluid communication with a bypass conduit provided in the casing. The method comprises controlling the solenoid valve to set the solenoid valve to the open state to cause a displacement of the shut-off element from the first position. The method comprises, responsive to a failure detection for the pneumatic circuit, controlling the solenoid valve to set the solenoid valve to the closed state to prevent passage of gas from the supply conduit through the bypass conduit to the circuit conduit in case of the failure.

Various effects are attained by the method of operating the protection valve for a commercial vehicle. The protection valve is electronically controlled. This allows filling and protection functions to be performed by energizing and de-energizing a solenoid of the solenoid valve, respectively. The operation method reduces delays that can be associated with conventional protection valve constructions that rely exclusively on mechanical operation principles for opening and closing the valve. The operation method uses energization and deenergization of the solenoid to control at what points in time and/or under which conditions (in particular for which supply pressure and/or which pneumatic circuit pressure) filling and protection are to be performed. This allows the operation method to be performed using a protection valve having a simpler construction as compared to conventional protection valves. The simpler construction contributes to robustness and durability. The electronic control also provides improved time characteristics, by reducing delays as compared to legacy implementations of protection valves, and ease of adaptability, as compared to conventional protection valve designs that do not allow valve characteristics to be readily varied unless mechanical modifications are made to the protection valve. The operation method also provides the effect that the protection valve is operative to isolate the pneumatic circuit, when the pneumatic circuit fails, from other pneumatic circuits and the compressor, while securing that a pressure in the other non-failed pneumatic circuits can be increased to a maximum working pressure that is supplied by the compressor.

Preferably, the method comprises processing, by control electronics, at least one pressure measurement, wherein the control electronics control the solenoid valve based on the at least one pressure measurement.

Thereby, the method allows desired valve characteristics of the protection valve to be attained, thereby mitigating issues associated with pressure drift that would otherwise be caused by wear. In addition, enhanced time response characteristics are attained as compared to mechanical operation principles of protection valves. The operation method also provides ease of adaptability, as valve characteristics are adjustable by means of the electronic control logic without necessarily requiring the physical characteristics of the protection valve to be adjusted to accommodate the adjustment of the valve characteristics.

Preferably, the at least one pressure measurement comprises a pneumatic circuit pressure in the circuit conduit or in the pneumatic circuit, wherein the control electronics controls the solenoid valve based at least on the pneumatic circuit pressure for performance of at least the protection function.

Thereby, the control electronics processes the pneumatic circuit pressure to detect a failure in the pneumatic circuit and can initiate an appropriate control action, comprising controlling the solenoid valve, responsive thereto.

Preferably, the control electronics comprises a non-volatile memory or storage configured to store instruction code, wherein the control electronics executes the instruction code to process the pneumatic circuit pressure and to control the solenoid valve for performance of at least the protection function.

Thereby, the control electronics executes the instruction code to detect, based on the pneumatic circuit pressure, a failure in the pneumatic circuit and can initiate an appropriate control action, comprising controlling the solenoid valve, responsive thereto. This provides enhanced time response characteristics and ease of adaptability, as valve characteristics are adjustable by means of the electronic control logic without necessarily requiring the physical characteristics of the protection valve to be adjusted to accommodate the adjustment of the valve characteristics.

Preferably, the control electronics further comprises a data interface, and the method comprises receiving, by the control electronics, the instruction code via the data interface and storing, by the control electronics, the instruction code in the non-volatile memory or storage.

Thereby, the valve characteristics are adjustable by means of the instruction code without necessarily requiring the physical characteristics of the protection valve to be adjusted to accommodate the adjustment of the valve characteristics.

Preferably, the control electronics receives the instruction code during manufacture and/or upon installation in the commercial vehicle and/or after installation in the commercial vehicle.

Thereby, the logic executed to determine under what conditions a solenoid of the solenoid valve is to be energized and deenergized, respectively, can be readily set. An adaptation of the valve characteristics is possible by means of the instruction code, without necessarily requiring the physical characteristics of the protection valve to be adjusted to accommodate the adjustment of the valve characteristics.

Preferably, the method comprises electronically controlling the solenoid valve to establish a filling sequence that determines an order in which the pneumatic circuit and at least one additional pneumatic circuit are filled.

Thereby, the method allows the pneumatic circuit to be filled with a different timing (e.g., earlier or later) than the at least one additional pneumatic circuit, using electronic control techniques. The filling sequence can thereby be established, taking advantage of the electronic controllability of the solenoid valve. The filling sequence may be dependent on a relevance of the pneumatic circuit for performance of safety-critical functions. For illustration, the protection valve may be electronically controlled such that the pneumatic circuit is filled prior to the at least one additional pneumatic circuit when the pneumatic circuit is more safety-critical (e.g., because it is a braking circuit) than the at least one additional pneumatic circuit (which may be, e.g., an auxiliary system circuit).

Preferably, the protection valve may be a protection valve of a commercial vehicle system that further comprises one or several additional pneumatic circuits connected to receive gas from the compressor, wherein the method comprises controlling the solenoid, in case of failure of the pneumatic circuit, to block fluid communication between the supply conduit and the circuit conduit through the bypass conduit to isolate the pneumatic circuit from the compressor and thereby ensure a target working pressure in the one or several additional pneumatic circuits.

Thereby, the method isolates the pneumatic circuit from the compressor in case of leakage, ensuring that a target pressure (such as a supply working pressure of, e.g., 12.5 bar) is available to the one or several additional pneumatic circuits that are non-failed.

Preferably, the control electronics controls the solenoid to establish a bypass gas flow from the supply conduit to the circuit conduit through the solenoid valve and the bypass conduit, to initiate filling or re-filling of a pneumatic circuit.

Thereby, filling or refilling can be initiated even while the shut-off element blocks the gas passage. This provides versatility in controlling at what point in time filling or refilling of the pneumatic circuit by means of the bypass gas flow is to be initiated in a filling sequence for several pneumatic circuits, including the pneumatic circuit connected to the circuit conduit.

Preferably, the control electronics controls the solenoid to establish a bypass gas flow based on a filling sequence that determines in which order a plurality of pneumatic circuits are to be filled.

Thereby, filling or refilling can be initiated in accordance with the filling sequence while the shut-off element blocks the gas passage. The electronic controllability provides enhanced versatility in realizing the desired filling sequence. This applies in particular when using a plurality of protection valves in combination, each configured to receive pressure from the same compressor and each being a protection valve in accordance with an aspect or embodiment.

Preferably, the control electronics controls the solenoid to establish the bypass gas flow based on (e.g., responsive to) command data or command signals that indicate that filling or refilling of the pneumatic circuit connected to the circuit conduit is to be initiated.

Thereby, filling or refilling can be initiated in accordance with the filling sequence. Enhanced controllability is attained by the protection valve.

Preferably, in the method, the protection valve is the protection valve of any aspect or embodiment disclosed herein.

Further optional features of the method and the effects attained thereby correspond to the optional features discussed in association with the protection valve, the control electronics, the air processing unit, the commercial vehicle system, and/or the commercial vehicle.

Preferably, the method may be performed by or using the protection valve, the control electronics, the air processing unit, the commercial vehicle system, and/or the commercial vehicle disclosed herein.

According to a further aspect of the invention, there is provided instruction code which, upon execution by at least one programmable circuit of control electronics for the protection valve, cause the at least one programmable circuit to perform the method according to an aspect or embodiment.

Thereby, the effects and advantages discussed in association with the protection valve and the method of operating the protection valve are attained.

According to a further aspect of the invention, there is provided a non-volatile storage medium storing instruction code which, upon execution by at least one programmable circuit of control electronics for the protection valve, cause the at least one programmable circuit to perform the method according to an aspect or embodiment.

Thereby, the effects and advantages discussed in association with the protection valve and the method of operating the protection valve are attained.

Further embodiments and configurations are defined by the dependent claims. These and other aspects of the invention will be apparent from and further explained with reference to the embodiments described herein with reference to the accompanying drawings, in which:
Fig. 1 is a cross-sectional view of a protection valve for a commercial vehicle according to an embodiment;
Fig. 2 is a partial cross-sectional view of the protection valve;
Fig. 3 is a further partial cross-sectional view of the protection valve in a state in which the protection valve is closed;
Fig. 4 is a further partial cross-sectional view of the protection valve in a state in which the protection valve is closed but starts to open;
Fig. 5 is yet another partial cross-sectional view of the protection valve in a state in which the protection valve is open;
Fig. 6 is a plan view of a shut-off element of the protection valve;
Fig. 7 is a cut-away perspective view of the protection valve;
Fig. 8 is a cut-away perspective exploded view of the protection valve;
Fig. 9 is a pneumatic circuit diagram of the protection valve;
Fig. 10 is a further pneumatic circuit diagram of the protection valve;
Fig. 11 is a still further pneumatic circuit diagram of the protection valve;
Fig. 12 is a yet further pneumatic circuit diagram of the protection valve;
Fig. 13 illustrates a threshold comparison performed to determine whether the protection valve is to be opened;
Fig. 14 illustrates a failure detection performed to determine whether the protection valve is to be closed;
Fig. 15 is a schematic representation of a commercial vehicle system comprising a several protection valves according to an embodiment;
Fig. 16 is a schematic representation of a commercial vehicle system comprising a multi-circuit protection valve comprising several protection valves according to an embodiment;
Fig. 17 is a schematic representation of an air processing unit and of a commercial vehicle system comprising the air processing unit;
Fig. 18 is a schematic representation of a vehicle comprising a pneumatic or electropneumatic braking system;
Fig. 19 is a schematic representation of a vehicle comprising a pneumatic or electropneumatic levelling system;
Fig. 20 is a schematic representation of a vehicle comprising a pneumatic or electropneumatic shock absorbing system;
Fig. 21 is a flow chart of a method of operating the protection valve; and
Fig. 22 is a flow chart of a use method.

Embodiments of the invention will be described with reference to the drawings. In the drawings, similar or identical reference signs designate elements with similar or identical configuration and/or function.

The invention relates to a protection valve for a commercial vehicle. The protection valve is operative to perform a filling function in which a supply conduit is fluidly communicated with a circuit conduit, to allow gas generated by a compressor to flow from the supply conduit to the circuit conduit. This state of the protection valve is also referred to as "open" state. The protection valve is further operative to perform a protection function responsive to detection of a failure in a pneumatic circuit. The protection valve is configured to block the gas from flowing between the supply conduit and the circuit conduit responsive to the failure detection. This state of the protection valve is also referred to as "closed" state.

Due to the construction and requirements imposed by pneumatic circuits of commercial vehicles, a protection valve for a commercial vehicle generally has components specifically adapted for installation and operation in the commercial vehicle. Protection valves for smaller vehicles, such as cars or motorcycles, generally do not have the characteristics required for installation and operation in the commercial vehicle.

As used herein, the term "protection valve" refers to a valve configured for use with a pneumatic circuit of a commercial vehicle and configured to shut off fluid communication between a supply conduit and a circuit conduit in case of failure of the pneumatic circuit. The protection valve is, thus, configured to isolate a failed pneumatic circuit from other pneumatic circuits that may be supplied with gas from the same compressor. The protection valve according to embodiments of the invention is operative to isolate the failed pneumatic circuit while securing that a pressure in other non-failed pneumatic circuits can be increased to a maximum working pressure that is supplied by the compressor (e.g., 12.5 bars). The term protection valve encompasses a protection valve of an APU and/or of a multi-circuit protection valve.

As used herein, the term "gas" encompasses a gaseous mixture. The gas may be air, without being limited thereto. The gas may be provided by a compressor and/or a reservoir of pressurized air.

As used herein, the term "pneumatic" component encompasses an electropneumatic component, and the term "pneumatic" system encompasses an electropneumatic system.

As used herein, the term "casing" refers to a body that houses other components therein. The casing may be a unitary body or may comprise several parts attached to each other.

As used herein, the term "conduit" refers to a structure that is delimited on at least two or at least three of its sides to provide a passage for gas flow. The term conduit encompasses lines, which may be implemented as separate components located within a casing of the protection valve. The term conduit encompasses channels formed within the casing, which do not need to be implemented as separate components but may be machines into the casing.

As used herein, the term "commercial vehicle" encompasses trucks, heavy-duty trucks, traction vehicles, trailers, busses. The term "commercial vehicles" comprises vehicles having an electric drive, such as electrified trailers.

As used herein, the term "pneumatic circuit" encompasses a pneumatic suspension, pneumatic levelling, door actuation systems, and/or braking systems of commercial vehicles, without being limited thereto.

As used herein, terms such as "electronically controllable," "electronical control," etc. encompass control that is performed under the control of electronic circuitry, irrespective of whether analog signals or digital data are used to perform the control operations.

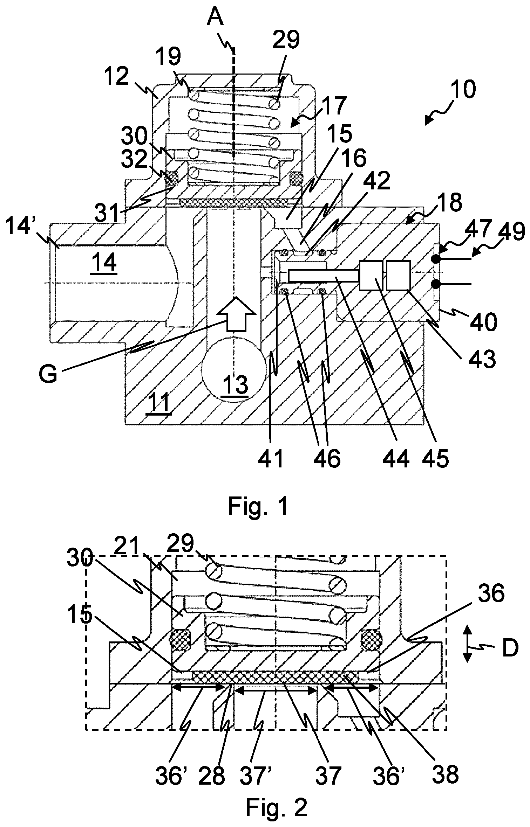

Fig. 1 is a cross-sectional view of a protection valve 10 for a commercial vehicle according to an embodiment. Fig. 2 is a partial cross-sectional view of the protection valve 10. The protection valve 10 comprises a casing 11, a shut-off element 30 (which can also be referred to as valve body 30) disposed in the casing 11, a bias element 29 disposed in the casing, and a solenoid valve 40 that is controllable and configured to cause displacement of the shut-off element 30. The casing 11 comprises a supply conduit 13, a circuit conduit 14, and a bypass conduit 16. The supply conduit 13, circuit conduit 14, and bypass conduit 16 may respectively comprise gas lines and/or channels machined into the casing 11. The supply conduit 13 is configured to receive gas G from a source. The source may comprise a compressor, a gas reservoir and/or an air dryer. The circuit conduit 14 is configured to provide the gas to the pneumatic circuit of the commercial vehicle, which the protection valve 10 is to isolate from other pneumatic circuits and the compressor in case of a pneumatic circuit failure.

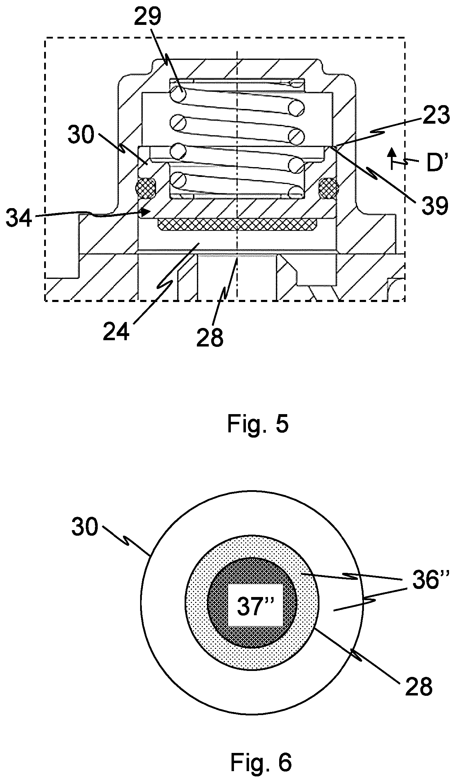

The shut-off element 30 is displaceable between a first position and a second position. When in the first position (shown in Fig. 1, Fig. 2, Fig. 3, Fig. 4, and Fig. 7), the shut-off element 30 is configured to close a gas passage 24 (Fig. 5) between the supply conduit 13 and the circuit conduit 14. When in the second position (shown in Fig. 5), the shut-off element 30 is configured to allow the gas G to flow between the supply conduit 13 and the circuit conduit 14 through the gas passage 24. The protection valve 10 is configured such that, when in the first position, the shut-off element 30 is engaged with a valve seat 28 provided on an inner surface of the casing 11. The protection valve 10 is configured such that engagement of the shut-off element 30 with the valve seat 28 blocks the gas passage 24 between the supply conduit 13 and the circuit conduit 14. The gas passage 24 is the gas passage 24 that directly connects the supply conduit 13 and the circuit conduit 14 without traversal of the bypass conduit 16. The shut-off element 30 may comprise an engagement material portion 38 for abutment against the valve seat 28. The engagement material portion 38 may be more resilient and/or may have a lower hardness than other sections of the shut-off element 30, to enhance the sealing between the supply conduit 13 and the circuit conduit 14. The protection valve 10 is configured such that, when in the second position, the shut-off element 30 is spaced from the valve seat 28 by a gap that forms the gas passage 24 (Fig. 5) between the supply conduit 13 and the circuit conduit 14 to allow the gas G to flow between the supply conduit 13 and the circuit conduit 14. The bias element 29, which may be a coil spring having a coil axis A, is configured to apply a bias force to the shut-off element 30 to bias the shut-off element 30 into the first position. The shut-off element 30 may be configured as a piston, without being limited thereto.

The bypass conduit 16 is configured to selectively provide and to selectively block, under control of the solenoid valve 40, a fluid communication between the supply conduit 13 and the circuit conduit 14 through the bypass conduit 16 and the solenoid valve 40. The solenoid valve 40 has a first solenoid valve port 41 in fluid communication with the supply conduit 13. The solenoid valve 40 has a second solenoid valve port 42 in fluid communication with the bypass conduit 16. The bypass conduit 16 connects the second solenoid valve port 42 and the circuit conduit 14. A surface portion 36 of the shut-off element 30 that extends transverse (e.g., perpendicular) to the axis A is exposed in a circuit conduit portion 15 of the circuit conduit 14. Thus, a circuit pressure in the circuit conduit 14 provides a force acting on the surface portion 36 along the axis A. Note that the surface portion 36 comprises both part of the engagement material portion 38 and a further part of the shut-off element that is exposed adjacent the engagement material portion 38.

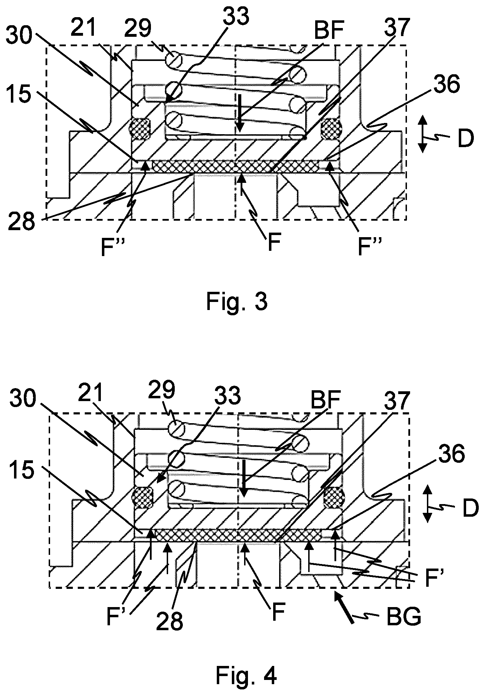

The solenoid valve 40 may be a 2/2-way valve. The solenoid valve 40 may be configured to provide fluid communication between the supply conduit 13 and the circuit conduit 14 via the bypass conduit 16 for opening the protection valve 10 and/or for filling a pneumatic circuit without necessarily having to displace the shut-off element 30. As will be explained in more detail with reference to Fig. 3, Fig. 4, Fig. 5, and Fig. 6, this fluid communication causes displacement of the shut-off element 30 away from the first position 33 (which is the rest position of the shut-off element 30) to the second position 34, for performance of the filling function in which the gas G can flow from the supply conduit 13 to the circuit conduit 14 through the gas passage 24.

In case of a failure in the pneumatic circuit, the decrease in pressure in the pneumatic circuit causes the bias force BF of the bias element 29 to return the shut-off element 30 to the first position. The solenoid valve 40 is configured to block fluid communication between the supply conduit 13 and the bypass conduit 16 through the solenoid valve 40 in case of the failure to prevent egress of gas from the supply conduit 13 through the bypass conduit 16 to the failed pneumatic circuit, from where the gas would escape to atmosphere.

The shut-off element 30 can also return to its first position when the pressure in the supply conduit 13 and the circuit conduit 14 decreases, e.g., in case of extended periods of non-usage of a vehicle in which the protection valve 10 is installed.

The solenoid valve 40 is electronically controllable. The solenoid valve 40 comprises a solenoid 43 housed in or projecting into the casing 11, a solenoid valve body 44, and a solenoid valve spring 45. Energization and deenergization of the solenoid 43 opens and blocks fluid communication between the supply conduit 13 and the circuit conduit 14 through the solenoid valve 40 and the bypass conduit 16.

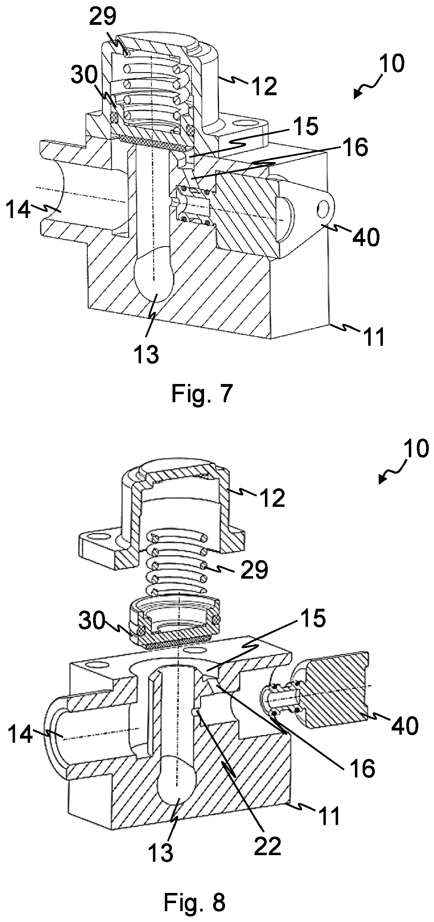

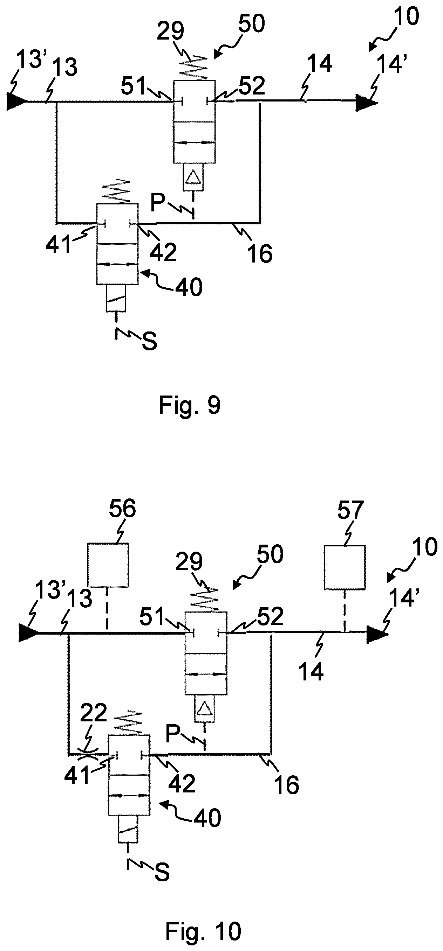

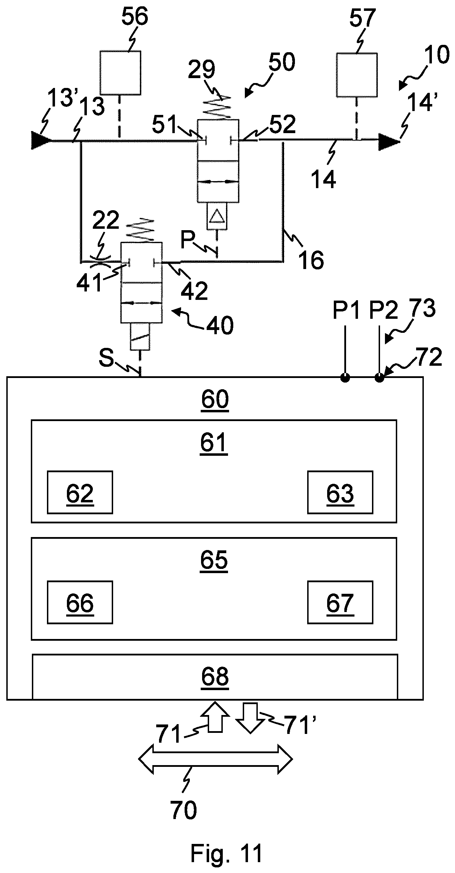

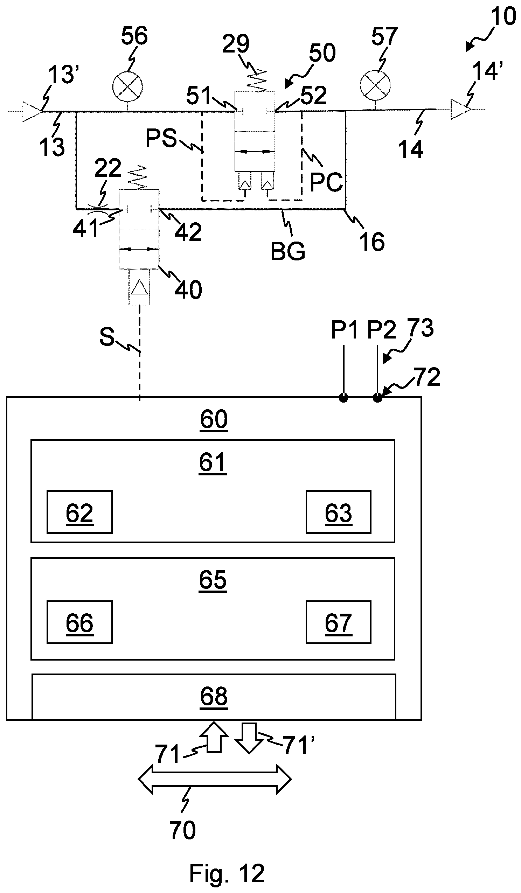

The functional and operational configuration of the protection valve 10 will be explained in more detail with reference to Fig. 2, Fig. 3, Fig. 4, Fig. 5, Fig. 6, Fig. 7, Fig. 8, Fig. 9, Fig. 10, Fig. 11, and Fig. 12. Fig. 3 is a further partial cross-sectional view of the protection valve 10 in a state in which the protection valve 10 is closed. Fig. 4 is a further partial cross-sectional view of the protection valve 10 in a state in which the protection valve 10 is closed and starts to open. Fig. 5 is a further partial cross-sectional view of the protection valve 10 in a state in which the protection valve is open. Fig. 6 is a plan view of the shut-off element 30 of the protection valve 10. Fig. 7 is a cut-away perspective view of the protection valve 10. Fig. 8 is a cut-away perspective exploded view of the protection valve. Fig. 9 is a pneumatic circuit diagram of the protection valve 10. Fig. 10 is a further pneumatic circuit diagram of the protection valve 10. Fig. 11 is a further pneumatic circuit diagram of the protection valve 10 in which control electronics for the protection valve 10 is also shown. Fig. 12 is a yet further pneumatic circuit diagram of the protection valve in which control electronics for the protection valve 10 is also shown.

The protection valve 10 is configured such that the shut-off element 30 is displaceable along a displacement direction D. The displacement direction D may be parallel to or coincident with an axis A of the bias element 29. The shut-off element 30 has the surface portion 36, at least part of which is exposed in the circuit conduit portion 15 of the circuit conduit 14. The surface portion 36 may be transverse, e.g., orthogonal, to the axis A. The protection valve 10 is configured such that the surface portion 36 is selectively exposed to a pressure increase in the circuit conduit 14 caused by the bypass gas flow from the supply conduit 13 to the circuit conduit 14 through the solenoid valve 40 and the bypass conduit 16, depending on whether the solenoid 43 is energized or deenergized. The surface portion 36 may have a surface portion dimension 36' that extends both over a region of the engagement material portion 28 and a region of the shut-off element adjacent to the engagement material portion 28 and free from the engagement material. The shut-off element 30 has a further surface portion 37. The protection valve 10 is configured such that the further surface portion 37 is continually exposed to the supply pressure in the supply conduit 13, irrespective of whether the solenoid 43 is energized or deenergized. The further surface portion 37 may be transverse, e.g., orthogonal, to the axis A. The further surface portion 37 may have a further surface portion dimension 37' that causes all of the further surface portion 37 to be located on the engagement material portion 28. The surface portion 36 and the further surface portion 37 may comprise surface segments that are parallel to each other. The bias element 29 is configured such that, for any operation condition (in particular for any supply pressure) for which the protection valve 10 is usable in accordance with the specifications of the protection valve 10, a persistent force F applied by the supply pressure in the supply conduit 13 onto the further surface portion 37 is less than a magnitude of the bias force BF applied by the bias element 29 when the shut-off element is in the first position. The bias element 29 may be configured such that the bias force BF ensures that the shut-off element remains 30 in the first position as long as a force magnitude F" applied by the circuit pressure in the circuit conduit onto the surface portion 36 is insufficient to overcome, in combination with the persistent force F, the bias force BF. The persistent force F and the force F" may vary in magnitude, depending on the operating conditions such as the working pressure of the compressor and the circuit pressure in the pneumatic circuit. However, the protection valve 10 is configured such that, for any supply pressure (even the maximum supply working pressure provided by the compressor), the bias force BF will maintain the shut-off element 30 in engagement against the valve seat 28 if the circuit conduit 14 is at ambient pressure. Thus, in the configuration depicted in Fig. 3 in which the solenoid valve 40 does not communicate the circuit conduit 14 with the supply conduit 13 through the bypass conduit 16 and the solenoid valve 40, the shut-off element 30 remains in abutment against the valve seat 28.

In order to open the valve, the solenoid valve 40 is configured to fluidly communicate the supply conduit 13 with the circuit conduit 14 through the solenoid valve 40 and the bypass conduit 16. The protection valve 10 is configured such that, when the solenoid valve 40 fluidly communicates the supply conduit 13 with the circuit conduit 14 through the bypass conduit 16 and the solenoid valve 40, the pressure in the circuit conduit 14 increases. The resultant force F' applied by the circuit pressure (that has been increased by the bypass gas flow) onto the surface portion 36 is sufficient to, in combination with the persistent force F, overcome the bias force BF, resulting in a shut-off element displacement D' of the shut-off element 30 out of its first position 33.

The protection valve 10 is configured such that, to initiate filling or refilling of the pneumatic circuit through the protection valve, the supply conduit 13 can be communicated with the circuit conduit 14 through the solenoid valve 40 and the bypass conduit 16. A timing for opening the solenoid valve 40, under the control of control electronics, can determine a filling sequence that specifies in which order several pneumatic circuits that comprise the pneumatic circuit connected to the circuit conduit 14 are to be filled or refilled. In order to open the protection valve 10 for establishing a filling sequence or refilling the pneumatic circuit with which the protection valve 10 is connected, the solenoid valve 40 can be energized to establish fluid communication between the supply conduit 13 and the circuit conduit 14 through the bypass conduit 16. Thereby, the pressure in the circuit conduit 14 causes the shut-off element 30 to be displaced out of its first position. The characteristics of the protection valve 10 are also influenced by a diameter of a throttle or orifice along the bypass from the supply conduit 13 to the circuit conduit 14 through the solenoid valve 40 and the bypass conduit 16. Thus, filling or refilling can be influenced by the throttle. The protection valve 10 may be configured to allow the throttle to be changed without requiring the shut-off element 30, the solenoid valve 40, or the bias element 29 to be exchanged. Enabling the bypass gas flow BG (Fig. 5) affects at what point(s) in time and/or at which pressure(s) the shut-off element 30 is displaced to open the gas passage 24.

Fig. 6 shows a schematic plan view of the shut-off element 30 in a viewing direction parallel to the axis A. The further surface portion 37 that is continuously exposed to the supply pressure in the supply conduit 13 is entirely located on the engagement material portion 28. The further surface portion 37 has a further surface portion area 37" which may, but does not need to be, circular. The surface portion 36 that is exposed to a pressure in the circuit conduit 14 (which can be selectively increased by opening the bypass gas flow BG through the solenoid valve 40 and the bypass conduit 16) is located on both an outer region of the engagement material portion 28 and a region of the shut-off element 30 that is co-planar with and extends adjacent to the engagement material portion 28. The bypass gas flow BG through the solenoid valve 40 and the bypass conduit 16 is operative to increase the circuit pressure, thereby increasing the force applied by the circuit pressure onto the surface portion 36 to cause displacement of the shut-off element to open the gas passage 24.

Fig. 7 and Fig. 8 are cut-away perspective views that show the circuit conduit 14 in greater detail. The circuit conduit 14 comprises the circuit conduit portion 15 that extends partially or entirely around the axis A, in a circumferential direction around the axis A. The circuit conduit portion 15 may comprise or may be a cylindrical geometry that is delimited radially by cylinder surfaces at both the inner and the outer side. The circuit conduit portion 15 may extend transversely from a tubular main portion of the circuit conduit 14.

Fig. 9, Fig. 10, Fig. 11, and Fig. 12 show pneumatic circuit diagrams of the protection valve 10. In Fig. 11 and Fig. 12, control electronics 60 for the protection valve 10 are also shown. The protection valve 10 includes a combination of a pneumatically controllable valve 50, which comprises the shut-off element 30 as a valve body of the pneumatically operable valve 50, and the solenoid valve 40. The pneumatically controllable valve 50 may be a pneumatically controllable 2/2-way valve 50 having a supply port 51 in permanent fluid communication with the supply conduit 13 and having a circuit port 52 in permanent fluid communication with the circuit conduit 14. The 2/2-way valve 50 is controlled by a pressure P acting on the surface portion 37 of the shut-off element 30. The protection valve 10 is configured such that the solenoid valve 40 generates the pressure P by communicating the supply conduit 13 selectively, and in an electronically controlled manner, with the circuit conduit 14. The solenoid valve 40 may be an electronically controllable 2/2-way valve. The solenoid valve 40 has the first solenoid valve port 41 in fluid communication with the supply conduit 13 and the second solenoid valve port 42 in fluid communication with the bypass conduit 16 and the circuit conduit 14. The solenoid valve 40 is configured to receive a control signal S that controls the solenoid 43. The control signal S is generated by control electronics 60 (Fig. 11 and Fig. 12), e.g., in dependence on a supply pressure P1 in the supply conduit 13 and/or in dependence on a pneumatic circuit pressure P2 in the circuit conduit 14.

Fig. 12 includes a pneumatic circuit diagram of the protection valve 10 that illustrates the configuration in greater detail. The 2/2-way valve is controlled by both a supply pressure PS in the supply conduit 13 and a circuit pressure PC in the circuit conduit 14. The circuit pressure PC is selectively increased by opening the solenoid valve 40 to provide the bypass gas flow BG from the supply conduit to the circuit conduit. This allows the pressure PC to be altered by opening the solenoid valve 40. Please note that the reference numerals PC and PS in Fig. 12 are used to refer to pneumatic signals, while reference numerals P1 and P2 can also designate measurements (in the form of electronic signals).

The protection valve 10 may further comprise an orifice 22 (Fig. 10, Fig. 11, and Fig. 12) positioned along a conduit that communicates the supply conduit 13 and the first solenoid valve port 41. The orifice 22 allows characteristics of the protection valve 10 to be adjusted. In particular, the presence and/or size of the orifice 22 influence the filling of the pneumatic circuit, thereby providing additional adaptability. The orifice 22 is a throttle that influences a flow rate of the bypass gas flow BG that results from a given pressure difference between the supply pressure PS and the circuit pressure PC. The orifice 22 may be provided in the casing 11 or in the solenoid valve 40.

The supply pressure P1 may be sensed by a first pressure sensor 56 (Fig. 10, Fig. 11, and Fig. 12). The first pressure sensor 56 may be integrated in the casing 11 of the protection valve 10, so as to be in fluid communication with the supply conduit 13. Alternatively, the first pressure sensor 56 may be provided separately from the casing 11. The pneumatic circuit pressure P2 may be sensed by a second pressure sensor 57 (Fig. 10, Fig. 11, and Fig. 12). The second pressure sensor 57 may be integrated in the casing 11 of the protection valve 10 so as to be in fluid communication with the circuit conduit 14. Alternatively, the second pressure sensor 57 may be provided separately from the casing 11.

Fig. 11 and Fig. 12 schematically illustrate the control electronics 60. The control electronics 60 may be configured to receive the supply pressure P1 and the pneumatic circuit pressure via one or several signal input(s) 72 to which the first pressure sensor 56 and/or the second pressure sensor 57 are connected via one or several signal line(s) 73, and/or via a data interface 68. The control electronics 60 comprises at least one programmable processing circuit 61. To perform the various functions disclosed herein, the at least one programmable processing circuit 61 may comprise one or several integrated circuits (ICs). The at least one programmable processing circuit 61may comprise any one or any combination of: a controller; a micro-controller; a processor; a micro-processor; field programmable gate arrays (FPGAs); an application specific integrated circuits (ASICs); a graphics processing unit (GPU); a tensor processing unit (TPU); a central processing unit (CPU).

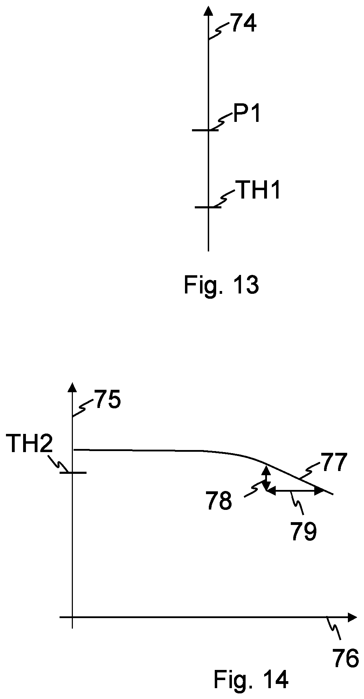

The at least one programmable processing circuit 61 is configured to perform a filling function logic 62 to determine at what time(s) and/or at what pressure(s) the solenoid 43 is to be energized for establishing fluid communication of the supply conduit 13 and the circuit conduit 14 through the solenoid valve 40 and the bypass conduit 16. The filling function logic 62 may be configured to perform a first threshold comparison, to compare the supply pressure P1 to a first threshold TH1 (Fig. 13). The filling function logic 62 may be configured to energize, or cause energization of, the solenoid 43 to allow the gas to flow from the supply conduit 13 to the circuit conduit 14 through the bypass (i.e., the solenoid valve 40 and the bypass conduit 16) based on a result of the first threshold comparison. Fluid communication between the supply conduit 13 and the circuit conduit 14 through the bypass may be established responsive to detecting that the supply pressure P1 is equal to or greater than the first threshold TH1 and/or in response to detecting that refilling of the pneumatic circuit is to be initiated. Responsive to determining that the pressure P1 reaches or exceeds the first threshold TH1, the filling function logic 62 is operative to energize the solenoid valve 40 in accordance with a filling sequence. The filling sequence determines an order in which the pneumatic circuit connected to the protection valve 10 is filled, relative to other pneumatic circuits that receive gas from the same compressor. The filling function logic 62 may access data that define the filling sequence, e.g., from a storage or memory or over a data bus. To perform the first threshold comparison, the at least one programmable processing circuit 61 may retrieve first processing logic data 66 stored in a non-volatile memory or storage 65 of the control electronics 60. The first processing logic data 66 may define the first threshold TH1. The first processing logic data 66 may comprise instruction code that executable by the at least one programmable processing circuit 61 to perform the first threshold comparison, for performance of the filling function. Fig. 13 illustrates the first threshold comparison, in which the supply pressure P1 is compared to the first threshold TH1, both shown along a pressure axis 74.

The at least one programmable processing circuit 61 is configured to perform a protection function logic 63 to determine under which condition(s) the solenoid 43 is to be deenergized for blocking fluid communication between the supply conduit 13 and the circuit conduit 14 through the bypass (i.e., through the solenoid valve 40 and the bypass conduit 16). The protection function logic 63 may be configured to process the circuit pressure P2 to perform a failure detection. The protection function logic 63 may be configured to deenergize, or cause de-energization of, the solenoid 43 to block the bypass responsive to detection of a failure in the pneumatic circuit. The decrease in circuit pressure in case of a failed pneumatic circuit causes the bias element 29 to force the shut-off element 30 to the first position. To perform the failure detection, the at least one programmable processing circuit 61 may retrieve second processing logic data 67 stored in the non-volatile memory or storage 65 of the control electronics 60. The second processing logic data 67 may define the processing of the circuit pressure P2 performed to detect failure of the pneumatic circuit. The failure detection may comprise a comparison of the circuit pressure P2 to the second threshold TH2 and/or determination of a rate of decrease in the pneumatic circuit pressure P2 (shown in Fig. 14 as a function 77 along a pressure axis 75 as a function of time along a time axis 76) to detect failure of the pneumatic circuit. The failure detection may be performed by monitoring a rate of decrease of the pneumatic circuit pressure P2, which may be determined by a decrement 78 in the pneumatic circuit pressure P2 over a time interval 79.

The operation characteristics of the protection valve 10 are adjustable, without requiring a modification of the physical configuration of the protection valve 10. For illustration, the control electronics 60 may be configured to receive, via the data interface 68, data 71 comprising instruction code that is executable to implement the logical operations to perform the filling, refilling, and protection functions, respectively. The control electronics 60 may be configured to store the instruction code in the non-volatile memory or storage 65 for subsequent execution. The data 71 may be received in various states, e.g., upon manufacture of the pneumatic system, during installation of the control electronics 60, or possibly even after the control electronics 60 has been installed in the commercial vehicle.

Referring again to Fig. 1, Fig. 2, Fig. 3, Fig. 4, Fig. 5, Fig. 6, Fig. 7, and Fig. 8, features that are preferably implemented in the protection valve 10 will be explained in more detail. Alternative or additional constructions may be realized in other embodiments. The casing 11 comprises a receptacle 17 in which the shut-off element 30 is slidably received. The shut-off element 30 may be a piston that is slidable in the receptacle 17. The receptacle 17 is closed by a cap 12. The cap 12 supports an end of the bias element 29. The cap 12 comprises a support structure 19 for retaining the end of the bias element 29 and preventing the end of the bias element 29 from moving in a direction transverse to the axis A along which the bias element 29 extends. Travel of the shut-off element 30 in the receptacle 17 may be delimited by interaction of an abutment end 39 of the shut-off element 30 and a stop structure 23, e.g., a ledge, formed on the cap 12 or another part of the casing 11. The bias element 29 is received in the receptacle 17. The receptacle 17 may be delimited by an inner wall 21 of the casing 11. The shut-off element 30 may comprise a groove 31 in which an O-ring seal 32 is received which engages against the inner wall 21.

The casing 11 comprises a further receptacle 18. The further receptacle 18 houses therein at least part of the solenoid valve 40. The solenoid 43 comprises an electrical input 47 directly connected to electrical control lines 49, via which the solenoid 43 is electronically controllable. The solenoid valve 40 may comprise several seals 46 that engage the casing 11. One of the several seals 46 may be a first O-ring arranged in between the first and second solenoid valve ports 41, 42. Another one of the several seals 46 may be arranged to seal the second solenoid valve port 42 from ambient atmosphere. I.e., the seals 46 comprise seals arranged on opposite sides of the second solenoid valve port 42. The seals 46 may respectively be O-ring seals.

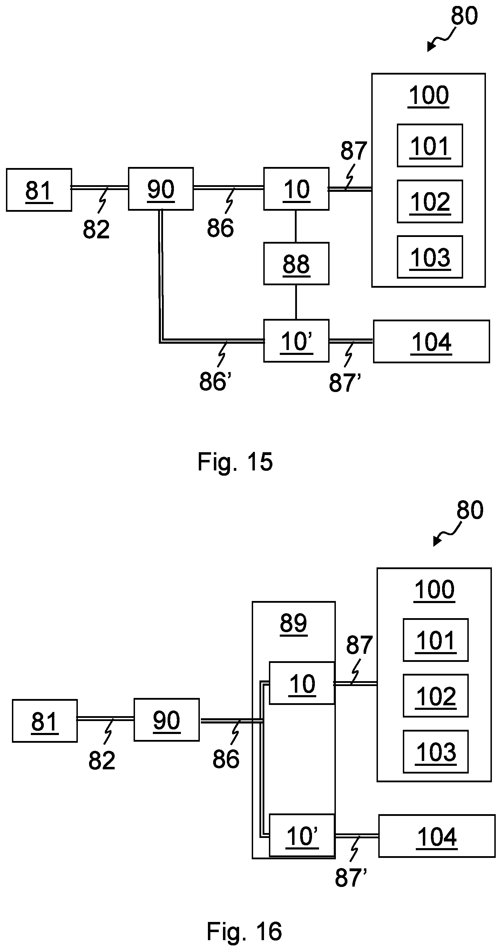

Fig. 15 is a schematic representation of a commercial vehicle system 80 comprising a several protection valves 10, 10' according to an embodiment. The commercial vehicle system 80 comprises a compressor 81, an air dryer 90, a protection valve 10, and a further protection valve 10'. The commercial vehicle system 80 comprises a pneumatic circuit 100 comprising pneumatic consumers 101, 102, 103. The commercial vehicle system 80 comprises a further pneumatic circuit 104 that may also comprise one or several pneumatic consumers.

The compressor 81 is connected to a supply line 82. The air dryer 90 may be connected, directly or indirectly, to the supply line 82. The protection valve 10 is connected, directly or indirectly, to the air dryer 90 via a connection line 86. The protection valve 10 is connected to the pneumatic circuit 100 via a circuit line 87. The further protection valve 10' is connected, directly or indirectly, to the air dryer 90 via a further connection line 86'. The further protection valve 10' is connected to the further pneumatic circuit 104 via a further circuit line 87'. Control electronics 60 for the protection valve 10 and of the further protection valve 10' may respectively be integrated into the respective valves 10, 10' and/or in an electronic control unit (ECU) 88. The ECU 88 may be configured to provide control data or control signals to the protection valve 10 and the further protection valve 10' to control a filling sequence according to which the different pneumatic circuits 100, 104 are filled or refilled.

While two pneumatic circuits 100, 104 and two associated protection valves 10, 10' are shown in Fig. 15, the commercial vehicle system 80 may comprise more than two pneumatic circuits and of associated protection valves. The protection valves 10, 10' are operative to protect, in case of failure of a pneumatic circuit, the other pneumatic circuits that receive pressure gas from the same compressor 81, by shutting off fluid communication between the supply conduit and the circuit conduit connected to the respective protection valve.

Fig. 16 is a schematic representation of a commercial vehicle system 80 comprising a multi-circuit protection valve 89 comprising several protection valves 10, 10' according to an embodiment. The several protection valves 10, 10' may share a common supply conduit 13. The several protection valves 10, 10' may be controllable by the ECU 88 (omitted in Fig. 16), which may be external from or integrated within the protection valves 10, 10'.

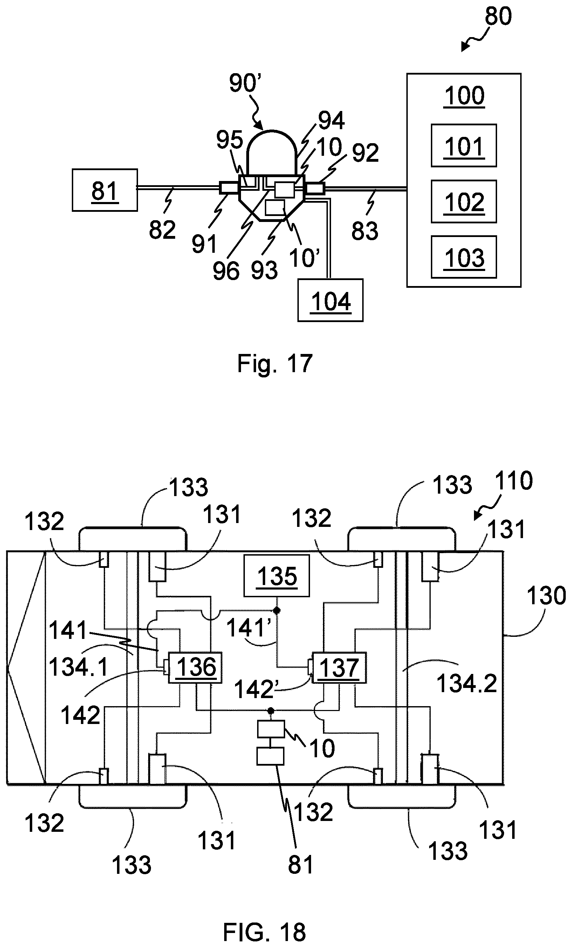

Fig. 17 shows a schematic representation of a commercial vehicle system 80. The commercial vehicle system 80 comprises a source of pressurized gas. The source of pressurized gas may comprise a compressor 81. The commercial vehicle system 80 comprises an air processing unit 90' comprising the protection valve 10. The commercial vehicle system 80 may comprise a pneumatic circuit 100.

The air processing unit 90' may comprise a first connector 91 to which a supply line 82 may be directly connected. The air processing unit 90' may comprise a second connector 92 to which a circuit line 83 may be directly connected. The air processing unit 90' may comprise a base 93 in which the protection valve 10 may be provided or to which the protection valve 10 may be attached. The air processing unit 90' may comprise an air dryer, with an air dryer cartridge 94 being reversibly engageable with and disengageable from the base 93 in a destruction-free manner. The air processing unit 90' may be configured to pass gas received at the first connector 91 through a first conduit 95 to the air dryer cartridge 94. The air processing unit 90' may be configured to pass the gas from the air dryer cartridge 94 through a second conduit 96 to the protection valve 10. The protection valve 10 may be directly connected to the second connector 92 via at least one further conduit.

The commercial vehicle system 80 comprises the pneumatic circuit 100. The pneumatic circuit 100 comprises at least one pneumatic consumer 101. The pneumatic circuit 100 may comprise the pneumatic consumer 101 and one or several additional pneumatic consumers 102, 103. The pneumatic circuit 100 may be the pneumatic circuit of a pneumatic or electropneumatic suspension system, pneumatic or electropneumatic levelling system, pneumatic or electropneumatic door actuation system, pneumatic or electropneumatic sensor cleaning system, and/or pneumatic or electropneumatic braking system.

The commercial vehicle system 80 may comprise more than one pneumatic circuit and may comprise more than one protection valve 10. Several of the protection valves 10, 10' may be provided respectively in the air processing unit 90'.

Fig. 18 is a schematic representation of a commercial vehicle 130. The commercial vehicle 130 comprises a pneumatic system 110. The pneumatic system 110 is a pneumatic or electropneumatic braking system, e.g., an electronic brake system (EBS). The pneumatic system 110 configured as a braking system comprises at least one pneumatic system component, such as a front axle modulator 136 and/or a rear axle modulator 137. The vehicle 130 comprises a front axle 134.1 and a rear axle 134.2 or several rear axles. The vehicle 130 comprises several wheels 133. The vehicle 130 comprises one or several sensors, such as wheel speed sensors 132 associated with the several wheels 133. The pneumatic system 110 comprises several brake cylinders 131. The pneumatic system 110 comprises control electronics 135, such as a control unit 135, which is coupled to the front axle modulator 136 and the rear axle modulator 137 via at least one electric connection 141, 141'. The front axle modulator 136 comprises an electric interface 142 for communicatively interfacing with the control electronics 135. The rear axle modulator 137 comprises a further electric interface 142' for communicatively interfacing with the control electronics 135. The front axle modulator 136 has at least one discharge port in fluid communication with brake cylinders 131 for front axle wheels. The rear axle modulator 137 has at least one further discharge port in fluid communication with brake cylinders 131 for rear axle wheels. The pneumatic system 110 comprises a source of pressurized gas. The source comprises the compressor 81 and may optionally comprise a reservoir. The pneumatic system 110 comprises the protection valve 10 according to any aspect or embodiment, which is directly or indirectly connected, via at least one line, to the source 81. The protection valve 10 is connected, via at least one other line, to the pneumatic circuit comprising the modulators 136, 137 and the brake cylinders 131.

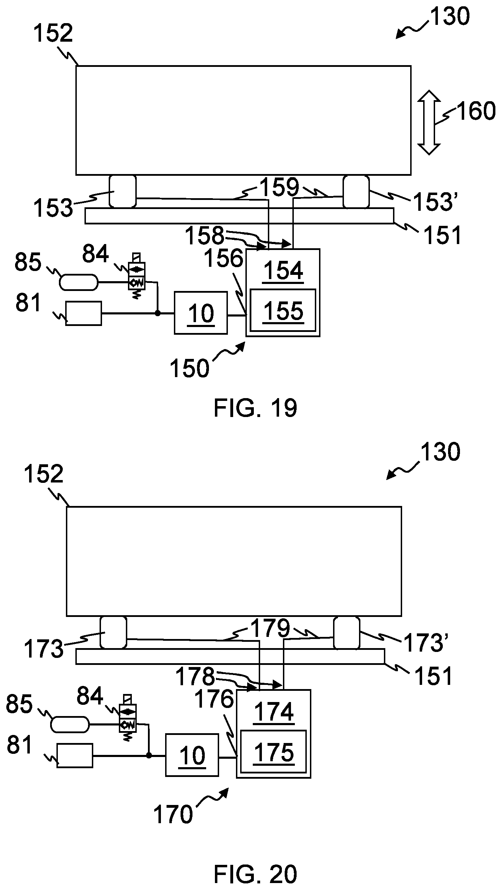

Fig. 19 is a schematic representation of a commercial vehicle 130 which comprises a pneumatic system 150 configured as an electro-pneumatic cabin leveling system. The electro-pneumatic cabin leveling system 150 is configured to change an inclination of a cabin 152 of the vehicle 130 relative to a chassis 151. The pneumatic system 150 comprises at least a pneumatic adjustment element 153 and a further pneumatic adjustment element 153', each of which is configured to change the inclination of the cabin 152. The pneumatic adjustment element 153 and the further pneumatic adjustment element 153' can be configured as inflatable air bags. The pneumatic system 150 comprises an electropneumatic control device 154. The electropneumatic control device 154 comprises at least two solenoid valves 155 (with the system of at least two solenoid valves being indicated merely schematically in Fig. 19). The electropneumatic control device 154 is arranged to selectively energize the at least two solenoid valves 155 such that compressed air received at a compressed gas inlet 156 is supplied to one or both of the pneumatic adjustment element 153 and the further pneumatic adjustment element 153'. The electropneumatic control device 154 is arranged to selectively energize the at least two solenoid valves 155 such that one or both of the pneumatic adjustment element 153 and the further pneumatic adjustment element 153' is vented via exhaust port of the electropneumatic control device 154. The electropneumatic control device 154 comprises consumer ports 158, each of which is connected to one of the pneumatic adjustment elements 153, 153' via a connecting line 159. The configuration of the pneumatic system 150 allows different parts of the cabin 152 to be adjusted along an adjustment path 160 in order to adjust the inclination and/or height so that the cabin 152 has a desired attitude relative to a gravity direction. The solenoid valves 155 can be actuated in a conventional manner, responsive to a mechanical linkage, signals or data received by the electropneumatic control device 154. The pneumatic system 110 comprises a source of pressurized gas. The source comprises the compressor 81 and may optionally comprise a control valve 84 and a reservoir 85. The pneumatic system 110 comprises the protection valve 10 according to any aspect or embodiment, which is connected, via at least one line, to the source 81, 84, 85 and, via at least one other line, to the pneumatic circuit comprising pneumatic consumers of the cabin levelling system.

Fig. 20 is a schematic representation of a commercial vehicle 130 comprising a pneumatic system 170 configured as an electro-pneumatic shock absorber system. The pneumatic system 170 comprises at least a pneumatic shock absorber 173 and a further pneumatic shock absorber 173', which are each arranged between a chassis 151 and a cab 152. The pneumatic shock absorber 173 and the further pneumatic shock absorber 173' can be configured as air bags whose pressure is adjustable. The pneumatic system 170 comprises an electropneumatic control device 174. The electropneumatic control device 174 comprises at least one solenoid valve or several solenoid valves 175 (which are shown merely schematically as a block in Fig. 20). The electropneumatic control device 174 is configured to selectively energize the at least one solenoid valve or the several solenoid valves 175 such that compressed gas received at a gas supply port 176 of the electropneumatic control device 174 is discharged to the pneumatic shock absorber 173 and the further pneumatic shock absorber 173', and/or such that the pneumatic shock absorber 173 and the further pneumatic shock absorber 173' can be vented via an exhaust port of the electropneumatic control device 174. The electropneumatic control device 174 comprises at least one consumer port 178, which is connected to the pneumatic shock absorber 173 and the further pneumatic shock absorber 173' via at least one connecting line 179. This configuration allows the pressure in the shock absorbers 173, 173' to be controlled using open-loop control and/or closed-loop control. The pneumatic system 110 comprises a source of pressurized gas. The source comprises the compressor 81 and may optionally comprise the control valve 84 and the reservoir 83. The source comprises the compressor 81 and may optionally comprise a control valve 84 and a reservoir 85. The pneumatic system 110 comprises the protection valve 10 according to any aspect or embodiment, which is connected, via at least one line, to the source 81, 84, 85 and, via at least one other line, to the pneumatic circuit comprising pneumatic consumers of the cabin levelling system.

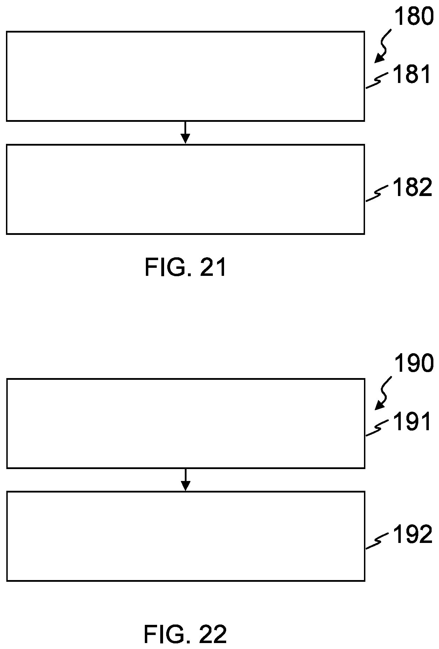

Fig. 21 is a flow chart of a method 180 of operating the protection valve 10. The method 180 may be performed automatically by or using the protection valve 10, the pneumatic system 80, 110, 150, 170, or the commercial vehicle 130.

The method 180 comprises a process block 181 of energizing the solenoid 43 of the protection valve 10 for performance of a filling function. Energizing the solenoid 43 may establish fluid communication of the bypass conduit 16 with the supply conduit 13 through the solenoid valve 40. This may be done in various operating conditions and for various purposes: For illustration, filling of the pneumatic circuit may be initiated by the bypass gas flow BG that allows the gas G to flow from the supply conduit 13 to the circuit conduit 14 through the bypass conduit 16 and the solenoid valve 40. For further illustration, the solenoid 43 may be energized to increase the pressure in the circuit conduit 14 so as to effect a displacement of the shut-off element 30 and thereby enable the gas G to flow between the supply conduit 13 and the circuit conduit 14 through the gas passage 24.

The method 180 further comprises a process block 182 of deenergizing the solenoid 43 of the protection valve 10 for performance of a protection function in case of a failure in the pneumatic circuit. Deenergizing the solenoid 43 blocks the bypass gas flow BG through the bypass conduit 16 to the circuit conduit 14, and a circuit pressure in the circuit conduit 14 decreases in case of the failure, because there is a gas outflow from the circuit conduit 14 to atmosphere. This closes the passage from the supply conduit 13 to the circuit conduit 14 through the bypass conduit 16, thereby preventing egress of pressurized gas to atmosphere through the pneumatic circuit having the failure.

The method 180 may optionally comprise a process block of providing instruction code to the control electronics 60 to configure operation characteristics of the protection valve 40.

Fig. 22 is a flow chart of a use method 190 of using the protection valve 10, the commercial vehicle system 80, 110, 150, 170, the commercial vehicle 130, or the operation method according to an embodiment. The use method 190 may be method of using protection valve 10, the commercial vehicle system 80, 110, 150, 170, the commercial vehicle 130, or the operation method according to an embodiment to provide improved resistance of protection valve characteristics against pressure drift and/or to provide improved time response characteristics of the protection valve 10 and/or to provide a protection valve 10 that has operation characteristics configurable by means of instruction code.

The use method 190 comprises a process block 191 of operating the protection valve 10. Operating the protection valve may comprise selective energization and de-energization of the solenoid 43 for performance of the filling function and the protection function.

The use method 190 comprises a process block 192 of mitigating pressure drift issues and/or improving time response characteristics by means of the electronic control of the protection valve 10 and/or improving adaptability of the valve characteristics of the protection valve 10.

While embodiments have been described with reference to the drawings, modifications and alterations may be implemented in other embodiments.

Various effects and advantages are attained by embodiments of the invention. Embodiments provide enhanced protection valve characteristics, e.g., with regard to pressure drift and time response characteristics, in association with robustness and simplicity of the protection valve.

### List of Reference Numerals (part of the description)

- 10: protection valve
- 11: casing
- 12: cap
- 13: supply conduit
- 13': protection valve supply port
- 14: circuit conduit
- 14': protection valve circuit port
- 15: circuit conduit portion
- 16: bypass conduit
- 17: receptacle
- 18: further receptacle
- 19: support structure
- 21: inner wall portion
- 22: orifice
- 23: stop structure
- 24: gas passage
- 28: valve seat
- 29: bias element
- 30: shut-off element
- 31: groove
- 32: O-ring seal
- 33: first position
- 34: second position
- 36: surface portion
- 36': surface portion dimension
- 36": surface portion area
- 37: further surface portion
- 37': further surface portion dimension
- 37": further surface portion area
- 39: abutment end
- 38: engagement material portion
- 40: solenoid valve
- 41: first solenoid valve port
- 42: second solenoid valve port
- 43: solenoid
- 44: solenoid valve body
- 45: solenoid valve spring
- 46: seal
- 49: electrical control lines
- 50: 2/2-way valve
- 51: supply port
- 52: circuit port
- 56: first pressure sensor
- 57: second pressure sensor
- 60: control electronics
- 61: processing circuit(s)
- 62: filling function logic
- 63: protection function logic
- 65: non-volatile memory or storage
- 66: first processing logic data
- 67: second processing logic data
- 68: data interface
- 70: data bus
- 71: data received at data interface
- 72: signal input(s)
- 73: signal line(s)
- 74: first pressure axis
- 75: second pressure axis
- 76: time axis
- 77: pneumatic circuit pressure curve
- 78: variation
- 79: time interval
- 80: commercial vehicle system
- 81: compressor
- 82: supply line
- 83: circuit line
- 84: control valve
- 85: pressure gas reservoir
- 86: connection line
- 86': further connection line
- 87: circuit line
- 87': further circuit line
- 88: electronic control unit
- 89: multi-circuit protection valve
- 90: air dryer
- 90': air processing unit
- 91: first connector
- 92: second connector
- 93: base
- 94: cartridge
- 95: first conduit
- 96: second conduit
- 100: pneumatic circuit
- 101: pneumatic consumer
- 102: second pneumatic consumer
- 103: third pneumatic consumer
- 104: further pneumatic circuit
- 110: electropneumatic braking system
- 130: commercial vehicle
- 131: brake cylinder
- 132: wheel speed sensor
- 133: wheel
- 134.1: front axle
- 134.2: rear axle
- 135: control electronics
- 136: front axle modulator
- 137: rear axle modulator
- 141: electric line
- 141': further electric line
- 142: electric interface
- 142': further electric interface
- 150: electropneumatic levelling system
- 151: chassis
- 152: cabin
- 153: adjustment member
- 153': further adjustment member
- 154: electropneumatic control device
- 155: solenoid valve(s)
- 156: supply port
- 158: discharge port(s)
- 159: pneumatic consumer lines
- 160: levelling adjustment path
- 170: electropneumatic shock absorbing system
- 173: pneumatic shock absorber
- 173': further pneumatic shock absorber
- 174: electropneumatic control device
- 175: solenoid valve(s)
- 176: supply port
- 178: discharge port(s)
- 179: pneumatic consumer lines
- 180: method
- 181, 182: process block
- 190: method
- 191, 192: process block
- A: coil spring axis
- BF: bias force
- BG: bypass gas flow
- D: shut-off element displacement direction
- D': shut-off element displacement
- F: persistent force
- F': force when valve is opened
- F": force when valve is closed
- G: gas
- P1: supply pressure
- P2: pneumatic circuit pressure
- PC: pressure applied by gas in supply conduit
- PS: pressure applied by gas in circuit conduit
- S: electric/electronic control
- TH1: first threshold
- TH2: second threshold

## Claims

1. Protection valve (10) for a commercial vehicle (130), the protection valve (10) comprising:
a casing (11), comprising: a supply conduit (13) configured to receive gas (G) at a supply pressure (P1), a circuit conduit (14) configured to provide the gas (G) to a pneumatic circuit (100) of the commercial vehicle (130), and a bypass conduit (16);
a shut-off element (30) disposed in the casing (11) and configured to, in a first position (33), block a gas passage (24) between the supply conduit (13) and the circuit conduit (14), and to, in a second position (34), open the gas passage (24) to allow the gas (G) to flow from the supply conduit (13) to the circuit conduit (14) through the gas passage (24);
a bias element (29) configured to provide a bias force (BF) to the shut-off element (30); and
a solenoid valve (40), the solenoid valve (40) being accommodated within or projecting into the casing (11), the solenoid valve (40) comprising a first solenoid valve port (41) in fluid communication with the supply conduit (13) and a second solenoid valve port (42) in fluid communication with the bypass conduit (16), the solenoid valve (40) having an open state to enable a bypass gas flow (BG) to flow from the supply conduit (13) through the solenoid valve (40) and the bypass conduit (16) to effect a displacement (D') of the shut-off element (30) from the first position (33), and the solenoid valve (40) having a closed state for performance of at least a protection function.

2. Protection valve (10) of claim 1, wherein a surface portion (36) of the shut-off element (30) is exposed in the circuit conduit (14), wherein the solenoid valve (40) is configured to cause, in the open state, an increase of a force (F') applied by a pneumatic circuit pressure (P2) in the circuit conduit (14) on the surface portion (36) to effect the displacement (D') of the shut-off element (30) from the first position (33).

3. Protection valve (10) of claim 2, wherein the shut-off element (30) comprises a further surface portion (37) exposed to the supply conduit (13), wherein the bias element (29) has resilient characteristics that ensure that the bias force (BF) applied when the shut-off element (30) is in the first position (33) has a force magnitude that exceeds a product of the supply pressure and a further area (37") of the further surface portion (37).

4. Protection valve (10) of any one of the preceding claims, wherein the solenoid valve (40) is electronically controllable
to be set to the closed state responsive to a failure detection for the pneumatic circuit (100); and/or
to establish a filling sequence that determines an order in which the pneumatic circuit (100) and at least one additional pneumatic circuit (104) are filled.

5. Protection valve (10) of any one of the preceding claims, further comprising control electronics (60) configured to process at least one pressure
measurement (P1, P2) and to control the solenoid valve (40) based on the at least one pressure measurement (P1, P2).

6. Protection valve (10) of claim 5, wherein the at least one pressure measurement (P1, P2) comprises a pneumatic circuit pressure (P2) in the circuit conduit (14) or in the pneumatic circuit (100), and wherein the control electronics (60) is configured to control the solenoid valve (40) based at least on the pneumatic circuit pressure (P2) for performance of at least the protection function, and/or
wherein the control electronics (60) comprises a non-volatile memory or
storage (65) having stored therein instruction code (66, 67), wherein the control electronics (60) is configured to execute the instruction code (66, 67) to process the pneumatic circuit pressure (P2) and to control the solenoid valve (40) for performance of at least the protection function.

7. Protection valve (10) of claim 6, wherein the control electronics (60) further comprises a data interface (70) configured to receive the instruction code (66, 67) for storage (65) in the non-volatile memory or storage (65).

8. Protection valve (10) of any one of claims 5 to 7, further comprising at least one pressure sensor (56, 57) interfaced with the control electronics (60), the at least one pressure sensor (56, 57) being configured to obtain the at least one pressure measurement (P1, P2).

9. Protection valve (10) of any one of the preceding claims, wherein the protection valve (10) comprises a filling adjustment mechanism (22) configured to influence a flow of the gas (G) from the supply conduit (13) to the circuit conduit (14), wherein the filling adjustment mechanism (22) comprises an orifice (22) in fluid communication with the first solenoid valve port (41).

10. Air processing unit (90') or multi-circuit protection valve (89), comprising at least one protection valve (10; 10') of any one of the preceding claims.

11. Commercial vehicle system (80; 110; 150; 170), comprising:
a compressor (81);
a pneumatic circuit (100); and
the protection valve (10) of any one of claims 1 to 9 or the air processing unit (90') of claim 10 or the multi-circuit protection valve (89) of claim 10, having an inlet (13'; 91) directly or indirectly connected to the compressor (81) and an outlet (14'; 92) directly or indirectly connected to the pneumatic circuit (100).

12. Commercial vehicle system (80) according to claim 11, further comprising one or several additional pneumatic circuits (104) connected to receive gas from the compressor (81), wherein the protection valve (10) is configured to, in case of failure of the pneumatic circuit (100), block fluid communication between the supply conduit (13) and the circuit conduit (14) through the bypass conduit (16) to isolate the pneumatic circuit (100) from the compressor (81) and thereby ensure a target working pressure in the one or several additional pneumatic circuits (104).

13. Commercial vehicle (130), comprising the protection valve (10) of any one of claims 1 to 9, the air processing unit (90') of claim 10, the multi-circuit protection valve (89) of claim 10, and/or the commercial vehicle system (80; 110; 150; 170) of claim 11 or claim 12.

14. Method of operating a protection valve (10) for a commercial vehicle (130), the protection valve (10) comprising a casing (11), a shut-off element (30) disposed in the casing (11), the shut-off element (30) being configured to, in a first position (33), block a gas passage (24) between a supply conduit (13) of the casing (11) and a circuit conduit (14) of the casing (11), and to, in a second position (34), open the gas passage (24) to allow the gas (G) to flow from the supply conduit (13) to the circuit conduit (14), a bias element (29) configured to provide a bias force (BF) to the shut-off element (30), and a solenoid valve (40) comprising a first solenoid valve port (41) in fluid communication with the supply conduit (13) and a second solenoid valve port (42) in fluid communication with a bypass conduit (16) provided in the casing (11), the circuit conduit (14) being coupled to a pneumatic circuit (100) of the commercial vehicle (130), wherein the method comprises :
controlling the solenoid valve (40) to set the solenoid valve (40) to the open state to cause a displacement of the shut-off element (30) from the first position (33); and
responsive to a failure detection for the pneumatic circuit (100), controlling the solenoid valve (40) to set the solenoid valve (40) to the closed state to block passage of gas from the supply conduit (13) to the circuit conduit (14) through the bypass conduit (16) for performance of at least a protection function, wherein the bias element (29) returns the shut-off element (30) to the first position in case of failure of the pneumatic circuit (100).

15. Method of claim 14, wherein the protection valve (10) is the protection valve (10) of any one of claims 1 to 9.
